# EUROPEAN PATENT APPLICATION

(11) **EP 4 071 087 A1**
(43) Date of publication of application: **12.10.2022**
(21) Application number: 22165143.3
(22) Date of filing: 29.03.2022
(51) Int. Cl.: B65F 1/16

(54) **AUTONOMOUS CLOSURE DEVICE FOR WASTE CONTAINERS**

(30) Priority: 29.03.2021 ES 202130631 U
(71) Applicant: Seigarbost, S.L., 20015 Donostia-San Sebastian Guipuzcoa (ES)
(72) Inventor: ZUFIRIA UNANUE, Xabier, 20015 Donostia-San Sebastian Guipuzcoa (GIPUZKOA) (ES)
(74) Representative: Cabinet Beau de Loménie

(57) **Abstract**

The invention relates to an autonomous closure device (1) for a waste container (2); that integrates, within a single assembly suitable to be fastened to the waste container (2), a user lid (1.2), elements for locking and unlocking the user lid (1.2), a main control unit (11), a solar photovoltaic panel, and a closure sensor. The main control unit (11) contains therein electronic elements for system control and bi-directional communication, including batteries, the solar photovoltaic panel is configured to power to the batteries of the main control unit (11), and the closure sensor is configured to detect the position of the user lid (1.2).

## Description

### Technical field

The present invention is related to waste containers and the like, and more particularly to those intended for the deposit of urban waste in a controlled manner, proposing an autonomous locking device for containers of this type that is easy to assemble and is energetically autonomous.

This closure device is also applicable to other types of containers and boxes of underground waste collection systems.

### State of the art

The waste containers installed on the streets of our cities are the most common system for collecting rubbish, and can be of various materials, shapes and sizes, and do not have a power supply connected to the electrical grid.

The new European regulations for waste management, the cost that the municipalities bear for treating them and social conscience itself are modifying the way in which waste collection and the subsequent treatment thereof are managed.

Electronic systems are being implemented to control the use of containers that require the identification of users who deposit their waste bags in them. These identification systems enable a large amount of data to be obtained on schedules, frequencies of use, etc. and on the behaviour of citizens with regard to the separation of waste at source.

Proper separation at source greatly facilitates waste management and lowers the cost of subsequent treatment.

Truly efficient electronic closure devices for containers contribute to achieving the recycling objectives, but they have two important requirements:
- on the one hand, they are complex to install because they are made up of various parts that have to be assembled in different parts of the container.
- on the other hand, they are constrained by the limited duration of the batteries that they require for the operation thereof.

### Object of the invention

With the aim of helping local administrations and citizens to achieve the highest rates of waste separation at source, the present invention consists of an autonomous closure device according to claim 1, that integrates all the necessary devices to lock and unlock the user lid, to collect data on the use of the lock and transmit them by telephone network or equivalent to a platform enabled for this use, and which incorporates its own energy power supply that ensures the operation thereof for several years.

All the electronic parts are installed in the invention, and can be installed on the user lid itself or on one side thereof, but always integral with the frame that supports the assembly. The entire assembly is assembled on a metal frame or equivalent that is fastened to the body of the container with fastening elements (screws, rivets, etc.), this frame itself being what serves as a locking element of the closure incorporated in the user lid.

The assembly is a single element that can be installed in any type of container, whether plastic, metal, fibre cement or other material, by performing a cut therein to create the gap through which the waste can be introduced, and fastening the device in that part of the container using the fastening elements already mentioned (screws, rivets, etc.).

The invention incorporates an electronic element that enables the user to be identified by means of an electronic card or equivalent (wristband, etc.) or an APP installed on their mobile phone.

By bringing this identification element closer to the invention, it recognises it and enables or not the opening of the user lid depending on the permissions that this identification device has been provided with.

In this way, the container is "equipped with intelligence", with an access control system therein, with bidirectional connectivity via a telephone network or equivalent, and with its own energy source through batteries recharged by the photovoltaic solar panel that the invention incorporates.

Additionally, this invention incorporates an opening detection system of the lid that keeps the metal shaft of the motor that locks the lid in a retracted position, until the lid returns to the closed position thereof, which is when it allows the shaft of the servomotor to return to the rest position thereof, thus blocking the user lid.

### Description of the figures

Figure 1 is a view of the upper part and shows the entire assembly that integrates the locking and unlocking element, the main electronic control unit, the support frame, the user lid to facilitate the deposit of waste bags and the energy power supply solar panel.
Figure 2 is a view of the lower part of the assembly showing the assembly of the motor, the metal shaft controlled by the motor that locks and unlocks the lid, the frame against which the metal shaft acts, the closing sensor that detects when the lid returns to the rest position thereof, and the cover that protects the entire assembly.

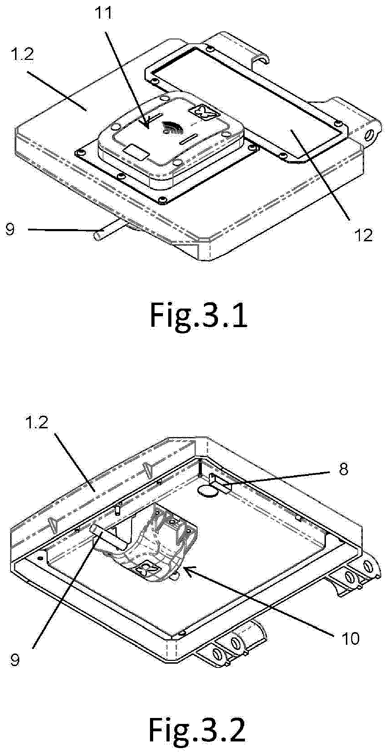

Figures 3.1 and 3.2 show both the upper and lower parts and the hinge that is fastened to the frame and on which the user lid pivots.

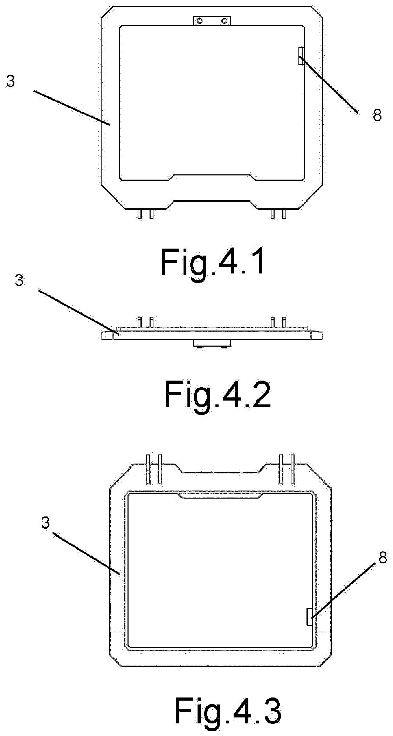

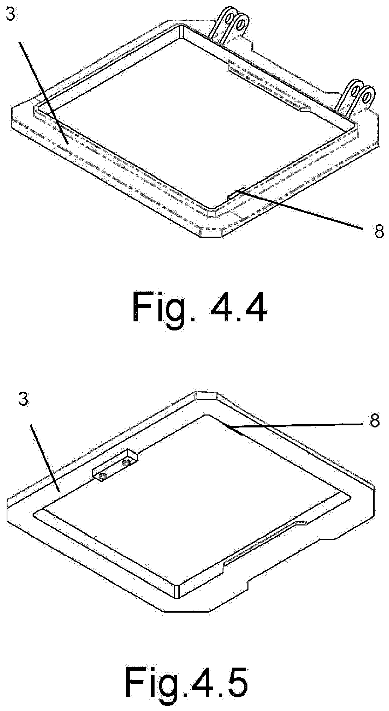

Figures 4.1, 4.2, 4.3, 4.4 and 4.5 are the different views of the frame, which is the element on which all the other elements are supported and which serves to fasten the assembly on any type or model of container. To do so, a gap simply needs to be made in it, with a measurement slightly less than that of this frame, to screw, rivet or fasten the container body.

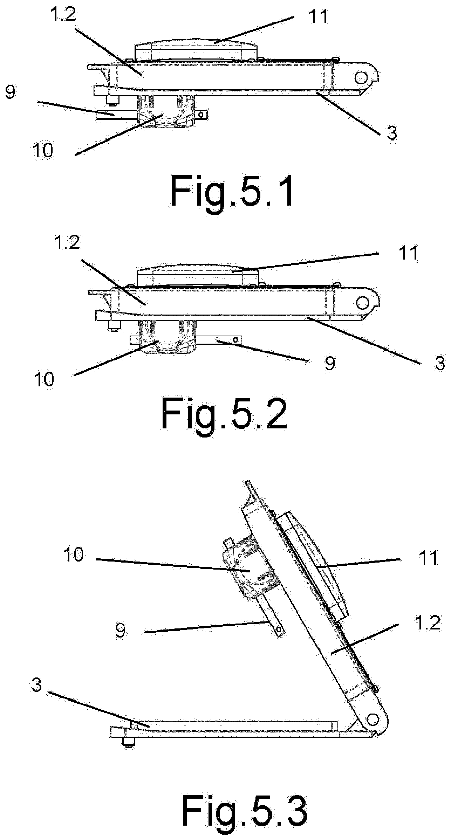

Figure 5.1 shows it in the closed position, with the locking shaft controlled by the motor extended in such a way that it prevents the lid from opening because it extends beyond the limit marked by the frame itself.
Figure 5.2 shows the locking shaft retracted, enabling the user lid to be opened.
Figure 5.3 shows the user lid open, with the locking shaft retracted.

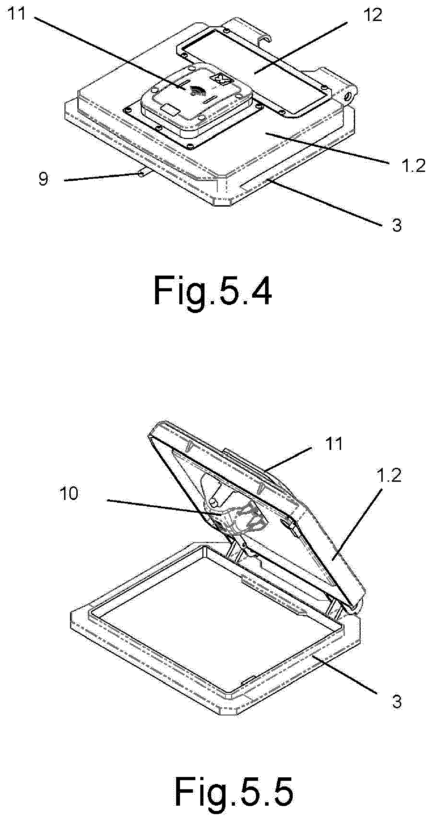

Figures 5.4 and 5.5 show in perspective the position of the closed and open lid.
Figures 6.1, 6.2, 6.3 and 6.4 show the method for positioning the device on a large container.
Figures 7.1, 7.2, 7.3 and 7.4 show the method for positioning the device in a small container.

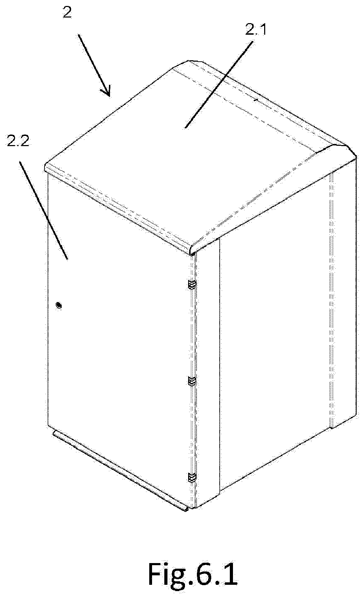

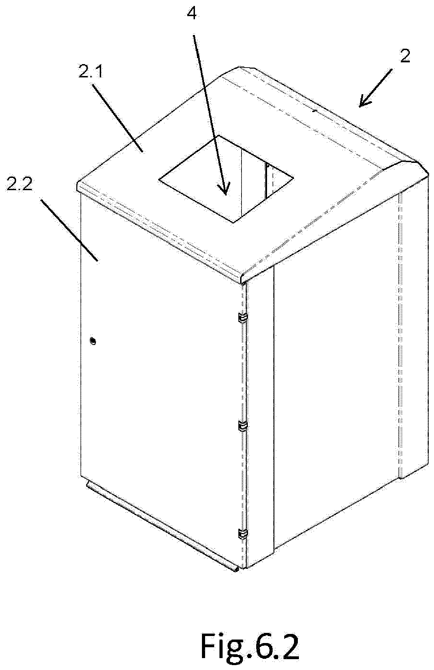

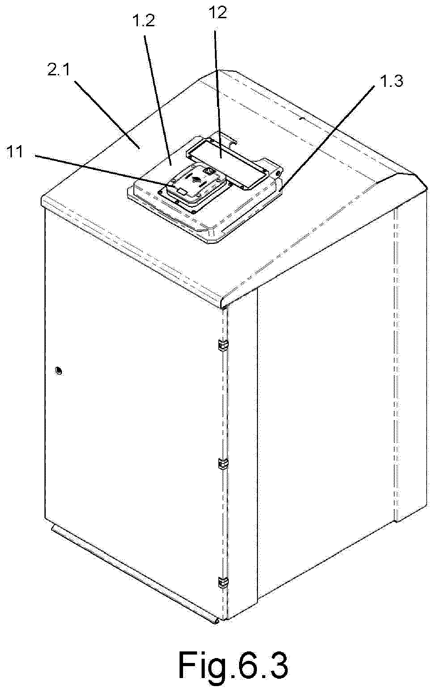

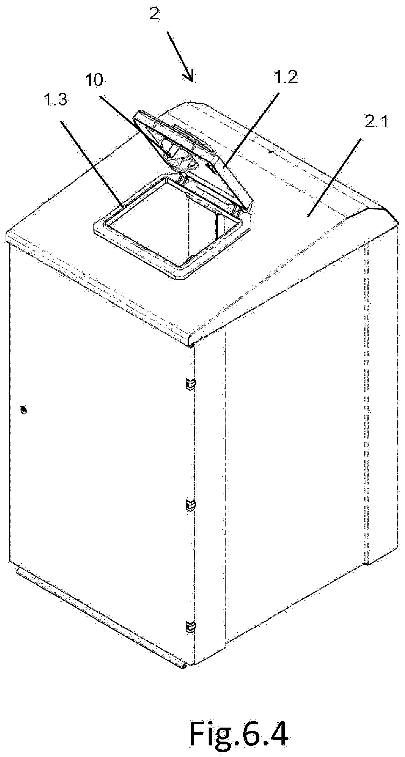

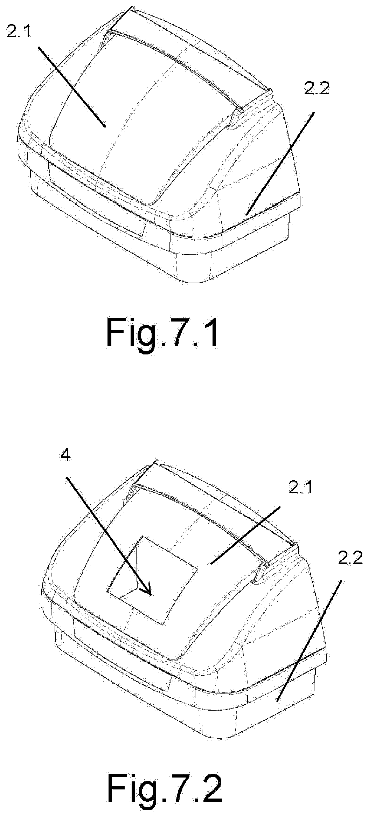

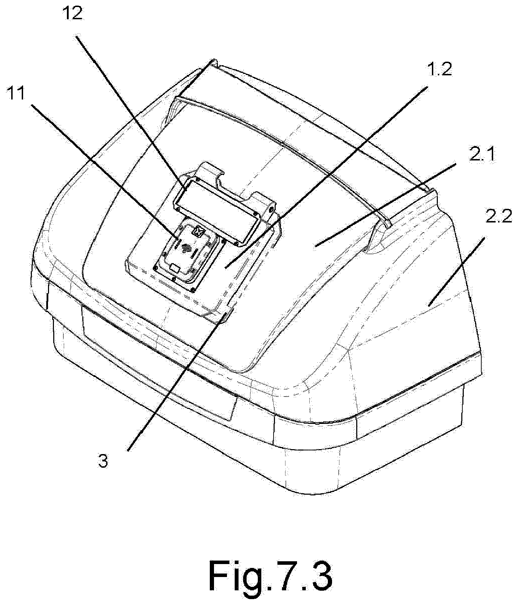

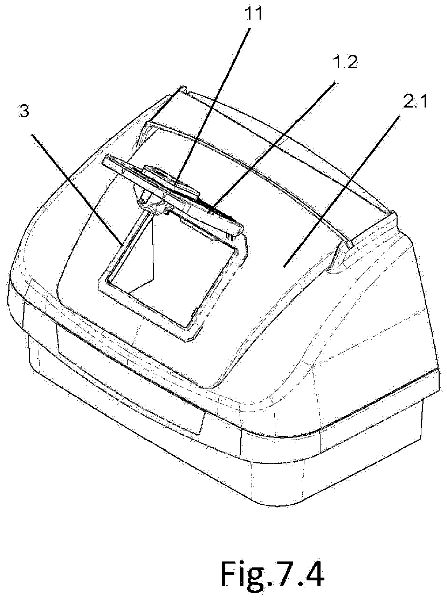

Figures 6.1 and 7.1 show the machining that must be performed on the containers to create the gap that will serve to introduce the waste. Figures 6.2 and 7.2 show the device already assembled on both containers, fastened by means of screws, rivets or equivalent. Figures 6.3 and 7.3 show the user lids open, enabling the space for the deposit of waste inside the container.

### Detailed description of the invention

The present invention consists of a closing device (1) for waste containers (2) and the like, which solves in a single element all the problems involved in installing a use control system in this type of element.

The closing and use control systems for containers currently in use are made up of different parts that are assembled separately in different parts of the container (2). In all of them there are elements that are assembled on the user lid (2.1) and others are installed on the body (2.2) of the container (2), while this invention integrates all the components in a single assembly.

The lid (1.2) of the closing device through which users can introduce their waste is a mobile element that moves between an open position and a closed position.

The open position corresponds to the position of the lid (1.2) with respect to the frame (1.3), which is the fixed part, such that the inside (4) of the container (2) remains accessible from the outside.

The closed position corresponds to the position of the lid (1.2) with respect to the frame (1.3) that supports it, in such a way that said lid (1.2) is blocking and preventing access to the inside (4) of the container (2).

In order to know the position of the lid (1.2), the latter and the frame (1.3) that supports it incorporate a closing sensor that detects (8) when the lid (1.2) has returned to the closed position thereof, then enabling the locking shaft (9) driven by the motor (10) to be activated, locking the lid (1.2) and preventing it from opening.

The main control unit (11) integrates the identification means (11.1) that are configured for electronic devices, electronic card, mobile phone, electronic bracelet, etc., duly accredited, to enable the opening of the container (2) on which the device (1) has been installed.

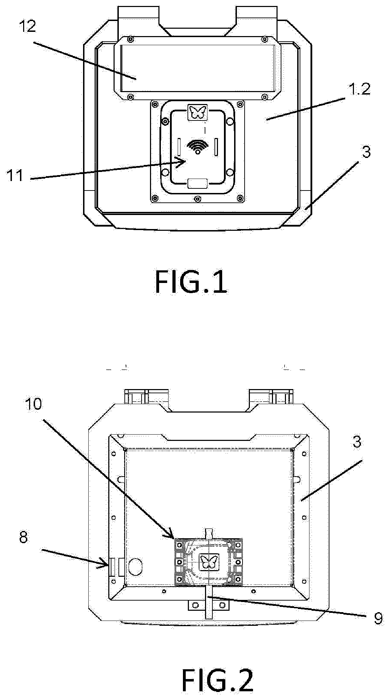

In the lid (1.2) there is a solar panel (12), as seen in Fig.1., to recharge the batteries that are the power source of the device (1).

Obviously, for this device (1) to be used as the only way to deposit waste in the container (2), the rest of the closing elements (lid (2.1) for emptying the container, etc.) thereof must remain closed for users, and must only be usable, by means of a locking and opening system, for cleaning and waste collection services.

## Claims

1. An autonomous closure device (1) for a waste container (2), that integrates, within a single assembly suitable to be fastened to the waste container (2):
- a user lid (1.2) movable between an open position and a closed position,
- elements for locking and unlocking the user lid (1.2),
- a main control unit (11) that contains electronic elements for system control and bi-directional communication, including batteries,
- a solar photovoltaic panel configured to provide power to the batteries of the main control unit (11), and
- a closure sensor configured to detect the position of the user lid (1.2).

2. The autonomous closure device (1) according to claim 1, configured to provide a wireless bi-directional communication channel.

3. The autonomous closure device (1) according to any one of claims 1 or 2, wherein the main control unit (11) integrates identification means configured to allow unlocking of the user lid (1.2) by duly accredited electronic devices.

4. A method of installing the autonomous closure device (1) according to any one of claims 1 to 3, comprising the steps of:
cutting an opening into a surface of the waste container (2), and
fastening the autonomous closing device (1) to the waste container (2) with fastening elements such as screws or rivets.
